# EUROPÄISCHE PATENTSCHRIFT

(11) **EP 1 651 490 B1**
(45) Veröffentlichungstag und Bekanntmachung des Hinweises auf die Patenterteilung: **23.04.2008**
(21) Anmeldenummer: 04766288.7
(22) Anmeldetag: 22.07.2004
(51) Int. Cl.: B60T 13/52, B60T 13/66, B60T 8/44, B60T 13/16, B60T 17/22

(54) **VERFAHREN ZUM BETRIEB EINER FAHRZEUGBREMSANLAGE**
METHOD FOR OPERATION OF A VEHICLE BRAKING SYSTEM
PROCEDE D'EXPLOITATION D'UN SYSTEME DE FREINAGE POUR VEHICULE

(30) Priorität: 31.07.2003 DE 10335589
(43) Veröffentlichungstag der Anmeldung: 03.05.2006
(73) Patentinhaber: Continental Teves AG & Co. oHG, 60488 Frankfurt am Main (DE)
(72) Erfinder: SCHMIDT, Robert, 56477 Rennerod (DE); FEIGEL, Hans-Jörg, 61191 Rosbach (DE); MERZOUG, Patrick, 65795 Hattersheim (DE)
(86) Internationale Anmeldenummer: PCT/EP2004/051574
(87) Internationale Veröffentlichungsnummer: WO 2005/012058

(56) Entgegenhaltungen:
- EP-A- 0 754 607
- WO-A-03/066405
- DE-A- 10 218 972
- US-A- 5 938 297

## Beschreibung

Die Erfindung betrifft ein Verfahren zum Betrieb einer Fahrzeugbremsanlage mit einem Unterdruckbremskraftverstärker zur Erzeugung einer Hilfskraft, wobei eine Annäherung an einen Punkt des Unterschreitens eines vorgegebenen Verhältnisses der Hilfskraft zur Betätigungskraft erkannt wird.

Unterdruckbremskraftverstärker benötigen eine vom Motor zur Verfügung gestellte Unterdruckversorgung zur Unterstützung der von dem Fahrer aufzubringenden Pedalkraft. Abhängig vom Motor wird bei bestimmten Pedalkräften ein Zustand erreicht, bei dem eine weitere Erhöhung der Kraft auf die Betätigungseinheit nur durch eine Steigerung der Pedalkraft möglich ist, da der Unterdruckbremskraftverstärker die maximal mögliche Unterstützungskraft erreicht hat. Den Zustand bezeichnet man als Aussteuerpunkt des Verstärkers.

Ist die maximal erreichbare Unterstützungskraft durch eine nur schwache Unterdruckversorgung zu gering, was im Zuge neuer Motorentechnik, wie z.B. Benzin-Direkteinspritzer oder Dieselmotoren immer stärker der Fall ist, dann wird eine zusätzliche Bremskraftunterstützung erforderlich. Eine Möglichkeit zur Erzeugung einer zusätzlichen Bremskraft bzw. eines Zusatz-Bremsdrucks ist der Einsatz einer "aktiven" hydraulischen Bremskraftunterstützung. Dies wird z.B. mittels einer hydraulischen Pumpe erreicht. Der hydraulische Druck, der im hydraulischen Hauptbremszylinder aus der vom Fahrer über das Bremspedal eingesteuerten, mittels Unterdruckbremskraftverstärker verstärkten Bremskraft resultiert, wird dabei von der hydraulischen Pumpe zusätzlich erhöht. Diese Pumpe wird von einem Elektromotor angetrieben, der von einer elektronischen Bremsenregelungseinheit angesteuert wird.

In der EP 0 754 607 A1 ist eine Bremsanlage mit einem Bremskraftverstärker und einem hydraulischen Bremsregelungssystem für Fahrzeuge offenbart, das einen höheren als den eingesteuerten Druck erzeugen kann. Das System ist gekennzeichnet durch eine Auswertevorrichtung, die das Unterschreiten eines vorgegebenen Verhältnisses der Hilfskraft zur Betätigungskraft (Aussteuerpunkts eines Boosters) erkennt, durch eine Steuervorrichtung, die mittels des hydraulischen Bremsregelungssystems nach Unterschreiten dieses Verhältnisses einen Soll-Druck in den Radbremsen erzeugt, und durch einen Soll-Druck, durch den zumindest teilweise eine Kompensation der Auswirkungen von einer im Verhältnis zur Betätigungskraft abnehmenden Hilfskraft erfolgt.

Das System weist den Nachteil auf, dass erst nach Unterschreiten des Verhältnisses ein Soll-Druck in den Radbremsen erzeugt wird, um ein zu geringes Vakuum zu kompensieren. Damit stellt sich zunächst ein geringerer als der vom Fahrer gewünschte Bremsdruck ein, da bedingt durch die Trägheit des Boosters zunächst eine negative Abweichung (zu geringer Verstärkungsfaktor) von der Booster-Kennlinie vorliegt.

Aus der DE 102 18 972 A1 ist ein Unterdruckbremskraftverstärker einer Fahrzeugbremsanlage bekannt, der ein Unterdruckgehäuse aufweist, das durch mindestens eine bewegliche Trennwand in mindestens eine Unterdruckkammer und mindestens eine Arbeitskammer aufgeteilt ist und eine Sensoreinheit zur Sensierung von Drücken in dem Unterdruckbremskraftverstärker aufweist. Bei dem vorbekannten System ist die Sensoreinheit dafür vorgesehen, den Druckunterschied zwischen der Arbeitskammer und der Unterdruckkammer zu sensieren und einer Auswerteeinheit zuzuführen, die eine Auswertung des Druckunterschieds zwischen der Arbeitskammer und der Unterdruckkammer vornimmt. Eine Ansteuerungseinheit zur Ansteuerung einer aktiven hydraulischen Bremskraftunterstützungseinheit auf Grundlage der Auswertung durch die Auswerteeinheit ist ebenfalls vorgesehen.

Bei diesen Systemen ist nur an einen Ausgleich einer zu geringen Verstärkung im Sinne einer "Kompensation" gedacht. Eine größere Verstärkung (über die ursprüngliche Booster-Kennlinie hinaus) erfolgt nicht.

Aufgabe der Erfindung ist es, ein verbessertes Steuerverfahren für eine Fahrzeugbremsanlage mit aktiver hydraulischer Verstärkung anzugeben.

Die Aufgabe wird erfindungsgemäß gelöst durch die Merkmale des unabhängigen Patentanspruchs 1.

Besonders vorteilhafte Weiterbildungen und Ausgestaltungen der Erfindung sind in den abhängigen Unteransprüchen angegeben.

Die der Erfindung zugrunde liegende Aufgabe wird durch ein Verfahren zum Betrieb einer Fahrzeugbremsanlage mit einem Unterdruckbremskraftverstärker zur Erzeugung einer Hilfskraft, wobei eine Annäherung an einen Punkt des Unterschreitens eines vorgegebenen Verhältnisses der Hilfskraft zur Betätigungskraft erkannt wird, welches dadurch gekennzeichnet ist, dass vor oder beim Unterschreiten dieses Verhältnisses ein größerer Solldruck erzeugt wird als der Solldruck, welcher zum Ausgleich der Auswirkungen des Unterschreitens des vorgegebenen Verhältnisses der Hilfskraft zur Betätigungskraft auf einen Ist-Druck benötigt wird.

Bei dem Verfahren kann vorzugsweise der hydraulische Druck, der in einem hydraulischen Hauptbremszylinder aus der vom Fahrer über das Bremspedal eingesteuerten, mittels Unterdruckbremskraftverstärker verstärkten Bremskraft resultiert, zusätzlich erhöht werden mittels einer hydraulischen Pumpe.

Vorzugsweise ist der Solldruck so bemessen, dass auch bei ungünstigen Systemvoraussetzungen, die z.B. durch Sensortoleranzen oder Boostertoleranzen verursacht sein können, eine hinreichend große Unterstützung für den Fahrer in jedem Fall vorliegt. Das Verhältnis der Hilfskraft zur Betätigungskraft (kurz vor oder am Aussteuerpunkt) stellt hier also eine Untergrenze dar, die immer überschritten wird.

Erfindungsgemäß ist es vorgesehen, dass die Annäherung an das Unterschreiten des Verhältnisses und/oder das Unterschreiten des Verhältnisses nach Maßgabe einer abgelegten, kalibrierten Booster-Kennlinie ermittelt oder abgeschätzt wird.

Erfindungsgemäß ist es vorgesehen, dass die Booster-Kennlinie kalibriert wird auf Grundlage eines gemessenen Drucks in der Vakuumkammer und der Arbeitskammer.

Erfindungsgemäß ist es vorgesehen, dass die Annäherung an das Unterschreiten des Verhältnisses und/oder das Unterschreiten des Verhältnisses nach Maßgabe des Drucks in dem Hauptbremszylinder (Führungsgröße) ermittelt oder abgeschätzt wird.

Erfindungsgemäß ist es vorgesehen, dass unter bestimmten Voraussetzungen ein höherer Solldruck erzeugt wird als der Druck, welcher zum Ausgleich der Auswirkungen des Unterschreitens des vorgegebenen Verhältnisses der Hilfskraft zur Betätigungskraft auf einen Ist-Druck benötigt wird (Overboost-Funktion).

Erfindungsgemäß ist es vorgesehen, dass ein (variabler) Aussteuerpunkt auf Grundlage von Messwerten für das Vakuum im Booster und mit Hilfe einer Kalibrierfunktion während des Betriebs laufend ermittelt wird.

In der Fig. wird das erfindungsgmäße Verfahren beispielhaft näher erläutert anhand der Abildung einer Booster-Kennlinie.

Eine Annäherung an den Aussteuerpunkt AP wird erkannt beim Punkt 1, bevor das Verhältnis V unterschritten wird (Punkt 2). Dann wird ein höherer Druck P erzeugt (durchgezogene Kennlinie Kneu). Vorzugsweise wird dann immer ein Druck aufgebaut, der einer größeren Verstärkung entspricht. Daher liegt diese Kennlinie Kneu über der Kennlinie K (langestrichelte Kennlinie), die nur eine Kompensation der abnehmenden Hilfskraft darstellt. Hier ist darüber hinaus dargestellt, wie bei dieser Kennlinie erst nach Unterschreiten des Verhältnisses ein höherer Druck erzeugt wird, so dass zuerst eine Veringerung der Unterstützung für den Fahrer resultiert (3). Ohne die Kompensation würde sich eine Kennlinie K' (kurzgestrichelte Linie) ergeben, wobei nur der Fahrer selbst einen erhöhten Druck P erzeugt.

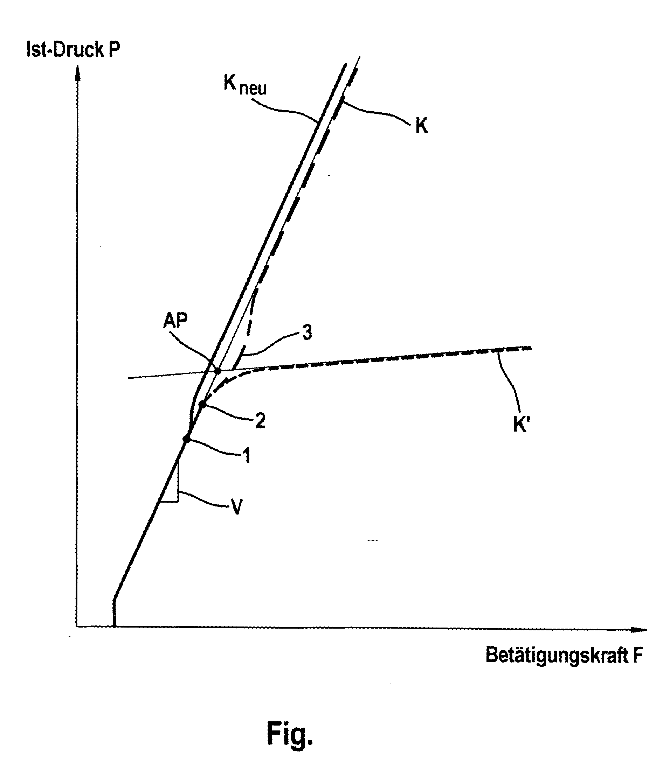

## Patentansprüche

1. Verfahren zum Betrieb einer Fahrzeugbremsanlage mit einem Unterdruckbremskraftverstärker zur Erzeugung einer Hilfskraft, wobei eine Annäherung an einen Punkt des Unterschreitens eines vorgegebenen Verhältnisses der Hilfskraft zur Betätigungskraft erkannt wird, **dadurch gekennzeichnet, dass** vor oder beim Unterschreiten dieses Verhältnisses ein größerer Solldruck erzeugt wird als der Solldruck, welcher zum Ausgleich der Auswirkungen des Unterschreitens des vorgegebenen Verhältnisses der Hilfskraft zur Betätigungskraft auf einen Ist-Druck benötigt wird.

2. Verfahren nach Anspruch 1, **dadurch gekennzeichnet, dass** die Annäherung an das Unterschreiten des Verhältnisses und/oder das Unterschreiten des Verhältnisses nach Maßgabe einer abgelegten, kalibrierten Booster-Kennlinie ermittelt oder abgeschätzt wird.

3. Verfahren nach Anspruch 2, **dadurch gekennzeichnet, dass** die Booster-Kennlinie auf Grundlage eines gemessenen Drucks in der Vakuumkammer und der Arbeitskammer kalibriert wird.

4. Verfahren nach Anspruch 2 oder 3, **dadurch gekennzeichnet, dass** die Annäherung an das Unterschreiten des Verhältnisses und/oder das Unterschreiten des Verhältnisses nach Maßgabe des Drucks in dem Hauptbremszylinder ermittelt oder abgeschätzt wird.

5. Verfahren nach Anspruch 2 oder 3, **dadurch gekennzeichnet, dass** das Verhältnis auf Grundlage von Messwerten für das Vakuum im Booster und mit Hilfe einer Kalibrierfunktion während des Betriebs laufend ermittelt wird.

## Claims

1. Method for operation of a vehicle brake system comprising a vacuum brake booster for the generation of an auxiliary force, wherein an approach is detected to a point where the auxiliary-force to actuating-force ratio is not reached,
**characterized in that** before or when this ratio is not reached, a nominal pressure is generated which is higher than the nominal pressure that is required to compensate the effects an actual pressure experiences when the auxiliary-force to actuating-force ratio is not reached.

2. Method as claimed in claim 1,
**characterized in that** the approach to the point where the ratio is not reached and/or the non-reaching of the ratio is found out or assessed according to a stored, calibrated booster characteristic curve.

3. Method as claimed in claim 2,
**characterized in that** the booster characteristic curve is calibrated on the basis of a measured pressure in the vacuum chamber and the working chamber.

4. Method as claimed in claim 2 or 3,
**characterized in that** the approach to the point where the ratio is not reached and/or the non-reaching of the ratio is found out or assessed according to the pressure in the master brake cylinder.

5. Method as claimed in claim 2 or 3,
**characterized in that** the ratio is constantly determined during operation on the basis of measured values for the vacuum in the booster and using a calibrating function.

## Revendications

1. Procédé d'exploitation d'un système de freinage de véhicule avec un servofrein à dépression pour produire une force auxiliaire, dans lequel l'approche d'un point du sous-dépassement d'un rapport prédéfini entre la force auxiliaire et la force d'actionnement est reconnue, **caractérisé en ce qu'**avant ou pendant le dépassement de ce rapport il est produit une pression de consigne supérieure à la pression de consigne qui est nécessaire pour compenser les effets du sous-dépassement du rapport prédéfini entre la force auxiliaire et la force d'actionnement, à une pression réelle.

2. Procédé selon la revendication 1, **caractérisé en ce que** l'approche du sous-dépassement du rapport et/ou du sous-dépassement du rapport est déterminée ou estimée en fonction d'une courbe caractéristique de servofrein étalonnée, enregistrée.

3. Procédé selon la revendication 2, **caractérisé en ce que** la courbe caractéristique de servofrein est étalonnée sur la base d'une pression mesurée dans la chambre sous vide et la chambre de travail.

4. Procédé selon la revendication 2 ou 3, **caractérisé en ce que** l'approche du sous-dépassement du rapport et/ou le sous-dépassement du rapport est déterminée ou estimée en fonction de la pression dans le cylindre de frein principal.

5. Procédé selon la revendication 2 ou 3, **caractérisé en ce que** le rapport est déterminé en permanence pendant le fonctionnement sur la base de valeurs de mesure pour le vide dans le servofrein et à l'aide d'une fonction d'étalonnage.
